# EUROPÄISCHE PATENTSCHRIFT

(11) **EP 1 008 435 B1**
(45) Veröffentlichungstag und Bekanntmachung des Hinweises auf die Patenterteilung: **16.04.2003**
(21) Anmeldenummer: 99124726.3
(22) Anmeldetag: 12.12.1999
(51) Int. Cl.: B29C 47/00, B29C 47/50, B29B 17/00, B29C 47/10

(54) **Verfahren und Anlage zur Herstellung von faserverstärkten Kunststoffmassen**
Method and installation for producing fiber-reinforced polymer compositions
Procédé et dispositif pour la fabrication de compositions polymères renforcées de fibres

(30) Priorität: 13.12.1998 DE 19857287
(43) Veröffentlichungstag der Anmeldung: 14.06.2000
(73) Patentinhaber: Maschinenfabrik J. Dieffenbacher GmbH & Co., 75031 Eppingen (DE)
(72) Erfinder: Therolf, Dieter, 71665 Vaihingen/Enz. (DE)
(74) Vertreter: Hartdegen, Anton

(56) Entgegenhaltungen:
- EP-A- 0 010 688
- EP-A- 0 321 742
- EP-A- 0 706 873
- WO-A-95/31319
- WO-A-97/49533
- DE-A- 19 530 020
- US-A- 5 253 994

## Beschreibung

Die Erfindung bezieht sich auf ein Verfahren zur Herstellung von faserverstärkten Kunststoffmassen nach dem Oberbegriff des Anspruchs 1 und auf eine Anlage zur Durchführung des Verfahrens nach dem Oberbegriff des Anspruchs 2.

Für das Verarbeiten von langfaserverstärkten Thermoplasten zu Formteilen sind zwei Preßverfahren bekannt. Das Platinenverfahren für Glasmattenverstärkte Thermoplasten (GMT) und das Plastifikatverfahren für Langfaserverstärkte Thermoplasten (LFT). Beim Platinenverfahren handelt es sich um flächige Halbzeugplatinen, welche im GMT-Ofen aufgeheizt werden. Die Platinen werden nach dem Aufheizen (plastifizieren) zu einem Preßpaket zusammengelegt und zum Formteil verpreßt.
Beim Plastifikatverfahren unterscheidet man wiederum das Halbzeugverfahren, wobei das verwendete Stäbchengranulat LFG (LangFaserGranulat) in einem Extruder zu einem Plastifikat plastifiziert, ausgestoßen und dann zu einem Formteil verpreßt wird und das Direktverfahren LFT (LangFaserverstärkte Thermoplasten), wobei aus den Fasern und dem Thermoplastgranulat die Mischung in einem Extruder hergestellt, plastifiziert und das Plastifikat herausgefördert wird. Dieses Plastifikat wird dann anschließend in einer Presse zu einem Formteil verpreßt. Die beiden Plastifizierverfahren haben den Vorteil, daß Recyclatmaterial direkt beim Formteilprozeß, das heißt bei der Herstellung des Plastifikats verarbeitet werden kann. Dieses Recyclatmaterial sind innerbetrieblich die Ausschnitteile und der Produktionsausschuß. Dieses Material, zu Recyclatchips zerkleinert, kann dann direkt im Kreislauf wiederverwendet werden. Damit muß dieser Produktionsabfall nicht gesammelt und über größere Strecken transportiert werden, um Verwendung in einem Halbzeugprodukt zu finden. Weitere Vorteile sind, daß beim Direktrecycling die thermische Belastung geringer ist und die Recyclatqualität bestens bekannt ist. Für die Verarbeitung der Recyclatchips (wiederverwertbarer Rohstoffabfallteile) und Stäbchengranulate wurden Extruder entwickelt, welche identische Anforderungsmerkmale haben und deshalb auch die Möglichkeit bieten, die Halbzeugstäbchen und die Recyclatchips einzeln oder gemischt zu einem Plastifikat zu plastifizieren. Die Anforderung, daß diese Materialien mit wenig Scherarbeit und geringen Stahldrücken aufgeschmolzen/plastifiziert werden, führte zu relativ großen Schneckendurchmessern und kleinen Drehzahlen mit großem Längen/Durchmesser-Verhältnissen. Bei der Verarbeitung der

Recyclatchips zusammen mit dem Direkt-LFT-Verfahren nach DE 195 300 20 A1 sind zwei Extruder erforderlich, wobei für die Recyclatchips ein Extruder vorgenannter Eigenschaften erforderlich ist und wobei beide Plastifikate anschließend vermischt werden müssen. Dabei hat sich gezeigt, daß das Vermischen der beiden Materialströme eine hohe technische Anforderung stellt, zumal möglichst keine Scherarbeit eingesetzt werden solle, um die Fasern nicht zu zerkleinern.

Um bei dem Recycling von langfaserverstärkten Thermoplasten die anfallenden Ausschnitteile aus dem Produktionsprozeß, den Produktionsausschuß und eventuell auch Altteile nutzen zu können und dabei ein hohes Faserpotential zu bekommen, sind relativ große Recyclatchips erforderlich. Nur die großen Recyclatchips bilden auch die Basis lange Fasern zu erhalten, falls sie im Recyclatausgangsmaterial vorhanden waren. Da diese Recyclatchips aus Wirtschaftlichkeitsgründen mit möglichst wenig Aufwand hergestellt werden müssen, werden meist einfache Einwellenzerkleinerer eingesetzt. Die mittlere Recyclatchipgröße mit unregelmäßiger Kontur sollte möglichst eine Kreisfläche von 50 mm Durchmesser einschließen. Dabei entstehen dann auch einzelne Chips mit bis zu 200 mm Länge, welche in der Recyclatfraktion enthalten sind. Um nun diese Recyclatchips dosieren zu können, sind relativ aufwendige kaskadisch arbeitende Dosiersysteme bekannt. Da auch mit Wasserstrahl ausgeschnittene Recyclatteile verwendet werden, müssen die daraus erzeugten Recyclatchips vor oder nach der Dosierung noch getrocknet werden, bevor sie in den Plastifizierextruder gelangen. Bei diesen Plastifizier- bzw. Aufschmelzextrudern handelt es sich um Maschinen, welche nur über die Wärmeleitung und Wärmestrahlung und möglichst ohne mechanische Scherarbeit die Recyclatchips aufschmelzen müssen. Der verwendete relativ große Schneckendurchmesser ist für den Einzug relativ großer Recyclatchips erforderlich und steht dadurch für die große erforderliche Heizfläche zur Verfügung, damit bei den geringen Drehzahlen, zur Vermeidung der Scherenergie, genügend Material aufgeschmolzen werden kann. Dabei ergibt sich dann schon ein relativ langer Plastifizierextruder mit einen Längen-Durchmesser Verhältnis von mehr als 30.

Der Erfindung liegt die Aufgabe zugrunde, ein Verfahren anzugeben, mit dem bei der Recyclatchip-Verarbeitung von großen Recyclatchips die Aufschmelzleistung der Plastifizierextruder erhöht und ihre Länge verkürzt sowie damit wirtschaftlich gearbeitet werden kann und eine Anlage zu schaffen, mit der eine Kostenreduzierung zu erreichen ist.

Die Lösung für das Verfahren besteht darin, daß *großformatige langfaserverstärkte Recyclatchips mit einer Kreisfläche von circa 50 mm Durchmesser und mit einer Länge von bis 200 mm einzelner Chips in einem beheizten Rohrschneckengerät gewogen und dosiert eingeführt sowie durch* *Vorheizung getrocknet werden, dabei die Recyclatchips bis kurz vor ihrer Klebrigkeit aufgeheizt und anschließend in einen Plastifizierextruder eingebracht, darin plastifiziert und als Plastifikat herausgefördert werden. Die Lösung für die Anlage besteht darin, daß die Einrichtung zur Aufbereitung der langfaserverstärkten Recyclatchips aus einem von außen und von innen beheizbaren Rohrschneckengerät besteht, das mit einem Nachfülltrichter und einem einen Materialausgang aufweisenden Gehäuse sowie einem darin drehbar gelagerten Rohrschneckenförderer ausgeführt ist, wobei unter dem Nachfülltrichter eine Materialdosiereinrichtung mit Wägezelle als Kraftsensor angeordnet ist.*

Als Erkenntnis und Lehre der Erfindung tritt hervor, daß die Plastifizierextruder verkürzt und ihre Aufschmelzleistung erhöht werden kann, wenn die großen Recyclatchips und/oder Stäbchengranulate bis kurz vor ihrer Klebrigkeit vorgeheizt in den Plastifizierextruder eingebracht werden. Von Vorteil dabei ist auch, daß damit 35% der zum Aufschmelzen benötigten Heizenergie bereits außerhalb des Plastifizierextruders in das Material eingebracht werden kann. Mit dem Vorheizen des Ausgangsmaterials ist dann auch die erforderliche Recyclatchiptrocknung gewährleistet.
Als besonderer Vorteil des Verfahrens und der Anlage gemäß der Erfindung ist herauszustellen, daß für die Materialdosierung, die Trocknung und Vorheizung der Recyclatchips und/oder der Stäbchengranulate nur ein Gerät, nämlich das Rohrschneckengerät benötigt wird. Damit kann wirtschaftlich gearbeitet werden, wobei gleichzeitig eine Kostenreduzierung für die Gesamtanlage entsteht. Weiter ist als Vorteil anzumerken, daß mit der Wägezelle im Rohrschneckengerät die Materialabnahme von einem Maximum bis zu einem Minimum zur gravimetrischen Materialförderung benutzt werden kann. Während der schnellen Nachfüllung auf maximalen Füllstand läuft die Schnecke mit der optimierten Drehzahl weiter bis erneut zwischen maximalem und minimalem Füllstand die Drehzahl gravimetrisch optimiert wird u.s.w..

Weitere vorteilhafte Maßnahmen und Ausgestaltungen des Gegenstandes der Erfindung gehen aus den Unteransprüchen und der folgenden Beschreibung mit der Zeichnung hervor.

Es zeigen:
- Figur 1: in schematischer Darstellung die Seitenansicht der Anlage zu Durchführung des Verfahrens gemäß der Erfindung und
- Figur 2: das Rohrschneckengerät gemäß der Erfindung.

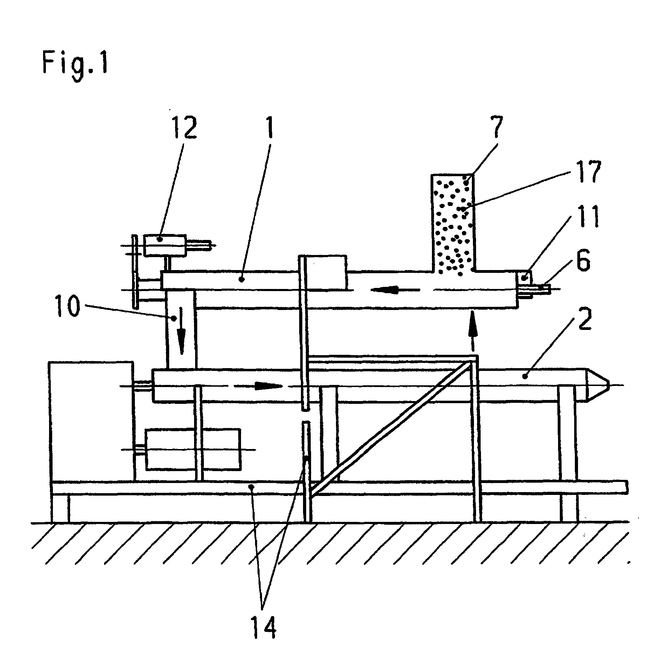

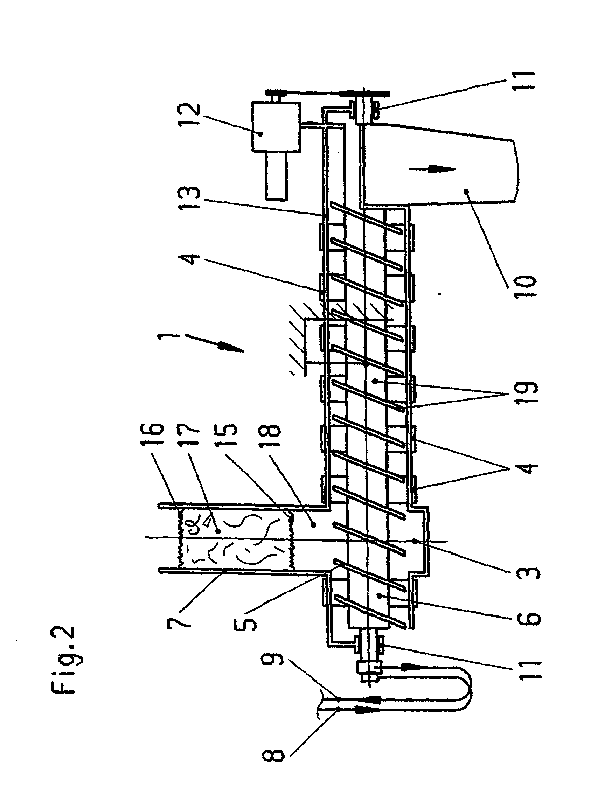

Die Figur 1 zeigt die Anlage gemäß der Erfindung mit dem Rohrschneckengerät 1 und dem Plastifizierextruder 2, die beide im Gestell 14 angeordnet und fixiert sind. Das Rohrschneckengerät 1 weist den Nachfülltrichter 7, für die Recyclatchips und/oder das Stäbchengranulat 17, den Materialausgang 10 zum Plastifizierextruder 2 und den Regelantrieb 12 als Antriebsaggregat zum Drehen des Schneckenrohres 6 auf. Das Rohrschneckengerät 1 nach Figur 2 besteht aus dem Gehäuse 13 und dem in den Lagern 11 drehbaren Schneckenrohr 6 mit angebrachten Schneckenscheiben 5 als Rohrschneckenförderer 19. Am Gehäusemantel sind Heizbänder 4 spiralförmig aufgewickelt zum Beheizen des Rohrschneckengerätes 1 von außen, während die Innenbeheizung des Schneckenrohres 6 durch Mediumumlauf mittels Heizungsvorlauf 8 und Heizungsrücklauf 9 erfolgt.

Die Materialdosiereinrichtung mit Wägezelle zum gravimetrischen Dosieren und Beheizen sowie zum Trocknen und Vorheizen der Recyclatchips ist unter dem Einfüllschacht 18 bzw. dem Nachfülltrichter 7 als Kraftsensor 3 angeordnet. Während einer schnellen Nachfüllung auf maximalen Füllstand 16 läuft das Schneckenrohr 6 mit einer optimierten Drehzahl weiter bis erneut zwischen maximalem und minimalem Füllstand 15 die Drehzahl gravimetrisch optimiert wird. Mit den beheizten Schneckenrohr 6 werden die Recyclatchips 17 hauptsächlich über Wärmeleitung und Wärmestrahlung beheizt. Die vorbeheizten Recyclatchips 17 fallen vom Auslauf des Rohrschneckengeräts 1 über einen Schacht 10 in den Einlaß des Plastifizierextruder 2.

### Bezugszeichenliste

- 1.: Rohrschneckengerät
- 2.: Plastifizierextruder
- 3.: Kraftsensor
- 4.: Heizbänder
- 5.: Schneckenscheibe
- 6.: Schneckenrohr
- 7.: Nachfülltrichter
- 8.: Heizungsvorlauf
- 9.: Heizungsrücklauf
- 10.: Materialausgang zu 2
- 11.: Lager
- 12.: Regelantrieb für 1
- 13.: Gehäuse für 1
- 14.: Gestell
- 15.: Minimumfüllstand
- 16.: Maximumfüllstand
- 17.: Material
- 18.: Einfüllschacht
- 19.: Rohrschneckenförderer
20.

## Patentansprüche

1. Verfahren zur Herstellung von faserverstärkten Kunststoffmassen unter Verwendung eines Plastifizierextruders (2), bei dem Fasern und Thermoplastgranulat undloder langfaserverstärkte Recyclatchips plastifiziert und als weiterverarbeitbares Plastifikat ausgetragen wird, **dadurch gekennzeichnet, daß** großformatige langfaserverstärkte Recyclatchips mit einer Kreisfläche von circa 50 mm Durchmesser und mit einer Länge von bis 200 mm einzelner Chips in einem beheizten Rohrschneckengerät (1) gewogen und dosiert eingeführt sowie durch Vorheizung getrocknet werden, dabei die Recyclatchips bis kurz vor ihrer Klebrigkeit aufgeheizt und anschließend in den Plastifizierextruder (2) eingebracht, darin plastifiziert und als Plastifikat herausgefördert werden.

2. Anlage zur Durchführung des Verfahrens nach Anspruch 1, umfassend einen Plastifizierextruder (2) für die Verarbeitung von Fasern und Thermoplastgranulat, eine Einrichtung zur Aufbereitung von langfaserverstärkten Recyclatchips sowie deren Einführung in den Plastifizierextruder (2), **dadurch gekennzeichnet, daß** die Einrichtung zur Aufbereitung der langfaserverstärkten Recyclatchips aus einem von außen und von innen beheizbaren Rohrschneckengerät (1) besteht, das mit einem Nachfülltrichter (7) und einem einen Materialausgang (10) aufweisenden Gehäuse (13) sowie einem darin drehbar gelagerten Rohrschneckenförderer (19) ausgeführt ist, wobei unter dem Nachfülltrichter (7) eine Materialdosiereinrichtung mit Wägezelle als Kraftsensor (3) angeordnet ist.

## Claims

1. A method for producing fiber-reinforced plastic masses by using a plastifying extruder (2), in which fibers and thermoplastic granulate and/or long-fiber-reinforced recyclate chips are plastified and are withdrawn as plastified material which can be further processed, **characterized in that** large-sized long-fiber-reinforced recyclate chips with a circular area of approx. 50 mm diameter and with a length of up to 200 mm of individual chips are weighed in and introduced in a dosed manner into a heated tube worm conveyor device (1) and are dried by pre-heating, with the recyclate chips thereby being heated up to the point shortly before they become sticky and thereafter being introduced into the plastifying extruder (2), and being plastified therein and being conveyed out of the same as plastified material.

2. An installation for performing the method as claimed in claim 1, comprising a plastifying extruder(2) for processing fibers and thermoplastic granulate, a device for preparing long-fiber-reinforced recyclate chips as well as their introduction into the plastifying extruder, **characterized in that** the device for preparing the long-fiber-reinforced recyclate chips consists of tube worm conveyor device (1) which is configured with a refill funnel (7) and a housing comprising a material output (10) as well as a tube worm conveyor (19) rotatably held therein, with a material dosing device with a weighing cell as a force sensor (3) being arranged beneath the refill funnel (7).

## Revendications

1. Procédé de fabrication de masses de matière plastique armée de fibres à l'aide d'une extrudeuses de plastification (2), dans lequel des fibres et des granulés de thermoplastique et/ou des morceaux de matière recyclée armée de fibres sont plastifiés et extraits sous la forme de matière plastifiée pouvant être travaillée, **caractérisé en ce que** de gros morceaux de matière recyclée armée de fibres ayant une surface circulaire d'environ 50 mm de diamètre et une longueur unitaire maximale de 200 mm sont pesés dans un convoyeur à vis chauffé (1), introduits de manière dosée et séchés par préchauffage, les morceaux de matière recyclée étant chauffés à la limite de devenir collants puis introduits dans l'extrudeuse de plastification (2), plastifiés dans celle-ci et extraits sous forme de matière plastifiée.

2. Installation pour la mise en oeuvre du procédé selon la revendication 1, comprenant une extrudeuse de plastification (2) pour la transformation de fibres et de granulés de thermoplastique, une installation pour la préparation de morceaux de matière recyclée armée de fibres et leur introduction dans l'extrudeuses de plastification (2), **caractérisée en ce que** l'installation de préparation des morceaux de matière recyclée armée de fibres se compose d'un convoyeur à vis (1) chauffé de l'intérieur, construit avec un logement (13) présentant une trémie de remplissage (7) et une sortie de matériau (10) et avec un convoyeur à vis (19) supporté avec possibilité de rotation dans celui-ci, un dispositif de dosage du matériau avec une cellule de pesage servant de capteur dynamométrique (3) étant disposée sous la trémie de remplissage (7).
